# EUROPÄISCHE PATENTANMELDUNG

(11) **EP 3 613 918 A1**
(43) Veröffentlichungstag der Anmeldung: **26.02.2020**
(21) Anmeldenummer: 18190776.7
(22) Anmeldetag: 24.08.2018
(51) Int. Cl.: E04F 13/14, B32B 17/10, B29C 39/10

(54) **HERSTELLUNGSVERFAHREN FÜR EIN FASSADENVERBUNDSYSTEM UND FASSADENVERBUNDSYSTEM**

(71) Anmelder: DAW SE, 64372 Ober-Ramstadt (DE)
(72) Erfinder: Lohmann Dr. Thomas, 68526 Ladenburg (DE); Eichner Tobias, 67549 Worms (DE)
(74) Vertreter: Metten, Karl-Heinz

(57) **Zusammenfassung**

Herstellungsverfahren für ein Fassadenverbundsystem mit einer Frontplatte und einer Trägerschicht, wobei die Frontplatte mindestens eine Beschichtungsoberfläche aufweist, wobei die Trägerschicht einen Füllstoff, insbesondere Leichtfüllstoff, und ein zweites Reaktionsharz umfasst, wobei das Verfahren die folgenden Schritte aufweist: i) Einführen der Frontplatte in eine Form, 2) Einfüllen einer Mischung mit dem Füllstoff und dem zweiten Reaktionsharz in die Form, 5) Aushärten des zweiten Reaktionsharzes bei einer ersten Aushärtetemperatur für eine erste Aushärtezeitdauer, 7) Entnahme des Fassadenverbundsystems aus der Form. Die Erfindung betrifft ferner ein Fassadenverbundsystem.

## Beschreibung

Die vorliegende Erfindung betrifft ein Herstellungsverfahren für ein Fassadenverbundsystem, das zugehörige Fassadenverbundsystem sowie eine Verwendung des Fassadenverbundsystems.

Aus dem Stand der Technik sind Fassadenelemente, insbesondere auch in Form von Fassadenverbundsystemen, zur Anbringung an Gebäudewänden grundsätzlich bekannt.

Die DE 20 2013 102 188 U1 offenbart eine trocken aufhängbare Dünnstein-Wandbauplatte, wobei diese eine Dünnsteinplatte und eine Verstärkungsplatte umfasst, wobei die Verstärkungsplatte mit der Dünnsteinplatte verklebt ist.

Die EP 0 452 746 A1 offenbart ein Wandverkleidungselement aus einer Natursteinplatte, die an ihrer Rückseite mit einer keramischen Platte verklebt ist, an deren Rückseite Befestigungsmittel zum Anbringen des Wandverkleidungselementes angeordnet sind, die jeweils durch ein Loch in der keramischen Platte hindurchgreifen und auf der anderen Seite der keramischen Platte in einer rückseitigen Ausnehmung der Natursteinplatte eine Verdickung aufweisen.

Die EP 0 277 535 A2 offenbart eine Fassadenplatte in Form einer Verbundglasscheibe aus wandseitiger Glasscheibe sowie sichtseitiger Scheibe, die durch eine Kunststoffschicht verbunden sind.

Die EP 0 595 062 A1 offenbart ein Glasbauelement für die rahmenlose Schraubbefestigung an einer Trägerkonstruktion, aus einer wenigstens zwei Einzelglasscheiben umfassenden Verbundglasscheibe, von denen die der Trägerkonstruktion zugewandte Einzelglasscheibe im Randbereich mit Bohrungen versehen ist, in denen jeweils ein mit einem Gewinde versehenes metallisches Schraubverbindungselement angeordnet ist.

Die EP 0 314 120 B1 offenbart eine Fassadenplatte zur Bildung einer Fassadenkonstruktion für Hochbauten mit einer aus einem Einscheiben-Sicherheitsglas bestehenden Scheibe, in welcher Löcher zur formschlüssigen Aufnahme von über die Plattenrückseite vorstehende Verankerungsbolzen vorgesehen sind, die mit einer Unterkonstruktion verbindbar sind.

Die EP 0 682 164 A1 offenbart ein Fassadenelement für eine Leichtmetall-Ganzglasfassade, mit einem plattenförmigen Glaselement, das raumseitig mit einer Rahmenkonstruktion verklebt ist und in der außenliegenden Scheibe raumseitig offene, sich nach außen erweiternde Sacklochbohrungen aufweist, in die unter Zwischenfügung einer Masse jeweils ein Anker mit einem entsprechend verdickten Kopf drehschlüssig sowie druck- und zugfest eingesetzt ist.

Die DE 3 810 200 A1 offenbart ein Bauelement für eine Fassadenverkleidung für Gebäude, das eine Glasplatte aufweist, die an der Wandkonstruktion des Gebäudes befestigbar ist.

Die WO 2006 038 804 A2 offenbart eine Außenwandkonstruktion, umfassend mindestens eine Glasplatte, wobei die mindestens eine Glasplatte mindestens zwei Glasschichten umfasst, die durch mindestens eine Zwischenschicht verbunden sind, eine Stützkonstruktion zum Tragen der mindestens einen Glasplatte, und Haltemittel, die mit der Trägerkonstruktion verbunden sind, um die mindestens eine Glasplatte fest zu halten.

Die EP 1 130 183 A1 offenbart eine Fassadenplatte mit mindestens einer Oberflächenplatte aus Marmor, Keramik, Stein, Metall, oder Stahl, welche an Gebäudefassaden befestigbar ist, wobei die Oberflächenplatte mit einer Tragschicht aus aufgeschäumtem Kunststoff direkt verschäumt ist.

Die EP 0 191 144 A2 offenbart einen Fassaden- oder Verbundplatte, welche wenigstens ein platten- oder wandartiges Gasbetonteil und eine Wärme-, Kälte- und Schallisolationsschicht umfasst, wobei beide Teile durch eine Klebschicht auf Zementbasis miteinander flächig verbunden sind und wobei in der Klebschicht ein zähelastisches, metallfreies, korrosionsfestes Gewebe eingebettet ist.

Den vorstehenden Ausführungen ist zu entnehmen, dass es an Fassadenelementen im Stand der Technik nicht mangelt. Gleichwohl hat sich gezeigt, dass trotz der zahlreichen Offenbarungen in diesem Gebiet, noch durchaus Verbesserungen möglich sind, insbesondere auch was die Herstellung von Fassadenelementen betrifft.

Ein Problem des Stands der Technik ist, dass die Herstellung solcher Fassadenelemente, insbesondere der Fassadenverbundsysteme, regelmäßig mit einem sehr hohen Aufwand verbunden ist. Es sind zahlreiche Verfahrensschritte erforderlich, welche die Herstellungskosten in die Höhe treiben. Oft müssen auch zwingend Materialien eingesetzt werden, die Nachteile mit sich bringen, beispielsweise sehr teuer sind, um geeignete mechanische Eigenschaften gewährleisten zu können. Eingesetzte Klebstoffe haben regelmäßig den Nachteil, dass diese eine höhere Brennbarkeit der Fassaden bewirken, was die Sicherheit beinträchtigen kann. Allerdings sind Alternativen für besagte Klebstoffe angesichts der erforderlichen mechanischen Stabilität, insbesondere des inneren Zusammenhalts, für viele Verbundsysteme nicht einsetzbar. Auch die Zeitdauer für die Herstellung solcher Fassadenelemente, insbesondere der Fassadenverbundsysteme, ist oftmals angesichts zahlreicher Verfahrensschritte sehr hoch, was die erzielbaren Stückzahlen in der Fabrikation negativ beeinträchtigt.

Ferner gibt es auch Nachteile hinsichtlich des erhaltenen Produkts. Fassadenelemente des Stands der Technik sind oftmals durchgehend hochspröde und können leicht beschädigt werden. Da besagte Fassadenelemente im Regelfall mehrere Jahre oder Jahrzehnte an der Gebäudewand halten sollen, ist dies ein wichtiger Aspekt. Auch ist es u. a. aus Gründen der Sicherheit vorzuziehen, wenn die Fassadenelemente möglichst leicht sind. Dies kann aber mit zahlreichen Fassadenelementen des Stands der Technik nicht erzielt werden.

Auch ist es nachteilig, wenn die Halterungssysteme den Witterungsverhältnissen ausgesetzt sind. Neben der optischen Beeinträchtigung ist hier die Gefahr höher, dass diese beschädigt werden, beispielsweise durch Korrosion oder mechanische Einflüsse.

Ein besonderer weiterer Nachteil zahlreicher herkömmlicher Systeme ist ihre Brennbarkeit. Fassadenbrände an hohen Gebäuden sind in Falle eines Brandes besonders gefährlich und es ist vorzuziehen, dass die dort verwendeten Materialien nicht ohne weiteres brennen. Allerdings kann dies bei zahlreichen Fassadenverbundsystemen des Stands der Technik nicht gewährleistet werden, insbesondere angesichts der vorstehend bereits genannten Anforderungen. Sie sind oftmals nicht an Hochhäusern verwendbar.

Es bleibt damit festzustellen, dass Fassadenelemente, insbesondere Fassadenverbundsysteme, Hochtechnologieprodukte sind, die zahlreiche Anforderungen simultan erfüllen sollen und idealerweise zugleich schnell, kostengünstig und effizient herstellbar sein sollen. Dies ist ein bestehendes Problem des Stands der Technik, das Verbesserungen in vielerlei Hinsicht ermöglicht.

Die Aufgabe der Erfindung ist es, ein im Lichte der vorstehend genannten Nachteile verbessertes Herstellungsverfahren für Fassadenverbundsysteme bereitzustellen. Insbesondere ist es eine Aufgabe, ein verbessertes Herstellungsverfahren für Fassadenverbundsysteme mit einer höheren Brandsicherheit bereitzustellen. Eine weitere Aufgabe ist es, ein verbessertes Fassadenverbundsystem bereitzustellen, insbesondere erhältlich durch besagtes Herstellungsverfahren.

Die Aufgabe wird gelöst durch ein Herstellungsverfahren für ein Fassadenverbundsystem mit einer Frontplatte und einer Trägerschicht, wobei die Frontplatte mindestens eine Beschichtungsoberfläche umfasst, wobei vorzugsweise ein, insbesondere ausgehärtetes, erstes Reaktionsharz die Frontplatte und die Trägerschicht verbindet, insbesondere wobei besagtes erstes Reaktionsharz eine Verbindungsschicht ausbildet, wobei die Trägerschicht einen Füllstoff, insbesondere Leichtfüllstoff, und ein, insbesondere ausgehärtetes, zweites Reaktionsharz umfasst, wobei das Verfahren die folgenden Schritte aufweist, insbesondere in dieser Reihenfolge:
- 0): vorzugsweise Einführen einer Antihaftfolie und/oder Antihaftmatte in die Form, insbesondere Pressform,
- 1): Einführen der, insbesondere vorgeheizten, Frontplatte in eine, insbesondere vorerwärmte, Form, insbesondere Pressform, vorzugsweise wobei die Frontplatte mit einem, insbesondere flüssigen, ersten Reaktionsharz beschichtet ist oder nach besagtem Einführen mit diesem beschichtet wird, insbesondere auf einer Rückseite der Frontplatte, wobei die Frontplatte mit einer gegenüberliegenden Vorderseite in der Form aufliegt,
- 2): Einfüllen einer Mischung, insbesondere Paste, umfassend einen Füllstoff, insbesondere Leichtfüllstoff, und ein zweites Reaktionsharz in die Form, insbesondere in die Pressform, vorzugsweise Einfüllen durch Aufbringen auf die Frontplatte und/oder das, insbesondere flüssige, erste Reaktionsharz,
- 3): vorzugsweise Einführen in die Form, insbesondere in die Mischung mit dem Füllstoff und dem zweiten Reaktionsharz, von Platzhaltern und/oder Befestigungsvorrichtungen zur Aufhängung des Fassadenverbundsystems an einer Gebäudewand, insbesondere von Platzhaltern und/oder Befestigungsvorrichtungen in Form von Metall- oder Kunststoffelementen, insbesondere bevorzugt welche an die Formgebung der Aufhängung angepasst sind,
- 4): vorzugsweise Bereitstellen der Form in einer Presse, insbesondere Einführen der Pressform in eine Presse nach Auflage einer Pressplatte, vorzugsweise auf die Mischung, insbesondere Paste, mit dem Füllstoff und dem zweiten Reaktionsharz, und Zusammenfahren der Presse, insbesondere bevorzugt bis die Trägerschicht eine mittlere Schichtdicke aufweist,
- 5): Aushärten des zweiten Reaktionsharzes, insbesondere des ersten und zweiten Reaktionsharzes, bei einer ersten Aushärtetemperatur für eine erste Aushärtezeitdauer, insbesondere in der Presse, welche auf die erste Aushärtetemperatur erwärmt wurde, vorzugsweise bei einem Pressdruck,
- 6): vorzugsweise Nachhärten des ersten und/oder zweiten Reaktionsharzes bei einer zweiten Aushärtetemperatur und für eine zweite Aushärtezeitdauer, insbesondere wobei die zweite Aushärtetemperatur niedriger als die erste Aushärtetemperatur ist und die zweite Aushärtezeitdauer höher als die erste Aushärtezeitdauer ist,
- 7): Entnahme des Fassadenverbundsystems aus der Form, insbesondere die Pressform aus der Presse und das Fassadenverbundsystem aus der Pressform.

Es hat sich überraschenderweise gezeigt, dass das Fassadenverbundsystem hergestellt werden kann, indem der Füllstoff, insbesondere Leichtfüllstoff, mit einem zweiten Reaktionsharz auf die Frontplatte aufgebracht ward. Es werden also nicht zwei Platten mit einem Klebstoff verbunden, wie dies im Stand der Technik oftmals beschrieben wird, sondern eine Trägerschicht auf der anderen Platte in situ erzeugt. Überraschenderweise kann mit dem zweiten Reaktionsharz eine verbesserte Haftung erzielt werden und gleichzeitig auf die herkömmliche Verklebung der Platten nach der Herstellung verzichtet werden. Überraschenderweise wirken sich Unebenheiten und Rauigkeiten der Frontplatte nicht negativ auf die Haftung zur Trägerschicht aus. Vielmehr haftet die Trägerschicht sogar besser, wenn die Frontplatte Unebenheiten und Rauigkeiten aufweist. Ohne an eine Theorie gebunden zu sein, wird vermutet, dass dies mit der in situ-Erzeugung der Trägerschicht in Verbindung steht, beispielweise wobei die Mischung, insbesondere Paste, mit dem zweiten Reaktionsharz und dem Füllstoff in die Unebenheiten und Rauigkeiten eindringt und dort vorliegt.

Die Nummerierung der vorliegend beschriebenen Verfahrensschritte gibt in einer besonders bevorzugten Ausgestaltung auch die Reihenfolge der Verfahrensschritte vor. In einer alternativen Ausgestaltung wird die Reihenfolge der Verfahrensschritte durch die Nummerierung abgesehen für die Schritten 2) und 3) vorgegeben, welche vertauscht sind, so dass die Abfolge 0), 1), 3), 2), 4), 5), 6), 7) lautet. In Verbindung mit den Schritten 2) und 3) haben sich demnach zwei Ausgestaltungen bewährt. Gemäß einer ersten Ausgestaltung werden die Platzhalter und/oder Befestigungsvorrichtungen schon vor dem Befüllen mit der Mischung, insbesondere Paste, mit dem Füllstoff und dem zweiten Reaktionsharz vorgegeben, insbesondere mit Hilfe des ersten Reaktionsharz des Schritts 1) fixiert, d.h. der Schritt 3) erfolgt vor dem Schritt 2). Hierdurch wird eine besonders genaue Positionierung erleichtert. Besagte Mischung, insbesondere Paste, mit dem Füllstoff und dem zweiten Reaktionsharz wird also erst im Nachhinein zugegeben. Gemäß einer zweiten Ausgestaltung wird erst die Mischung, insbesondere Paste, mit dem Füllstoff und dem zweiten Reaktionsharz zugegeben, insbesondere auf das erste Reaktionsharz des Schritts 1). Anschließend werden dann die Platzhalter und/oder Befestigungsvorrichtungen eingefügt, d.h. der Schritt 2) erfolgt vor dem Schritt 3). Hierbei erfolgt ein Einführen der Platzhalter und/oder Befestigungsmittel für eine Aufhängung der Trägerschicht an einer Gebäudewand in die Mischung, insbesondere Paste, mit dem Füllstoff, insbesondere Leichtfüllstoff, und dem, insbesondere flüssigen, zweiten Reaktionsharz. Platzhalter, die später zur Befestigung dienen, sind dann schon kraftschlüssig mit der Frontplatte durch das erste Reaktionsharz verbunden.

Auch die Schritte 6) und 7) können vertauscht sein, so dass erst der Schritt 7) und dann der Schritt 6) erfolgt. In diesem Fall erfolgt das Nachhärten nach Entfernung des Verbundsystems aus der Form. Vorzugsweise wird zumindest Schritt 2) erst nach dem Schritt 1) ausgeführt, wobei es in einer alternativen Ausgestaltung auch möglich ist, den Schritt 1) nach dem Schritt 2) oder 3) durchzuführen, indem die Frontplatte nachträglich aufgelegt wird und vorzugweise zuvor mit dem ersten Reaktionsharz beschichtet wird. Die Reihenfolge der Schritte könnte dann lauten: o), 2), 3), 1), 4), 5), 6), 7) oder 0), 3), 2), 1), 4), 5), 6), 7).

Die Platzhalter sind vorzugsweise Platzhalter zur Aufnahme der Befestigungsmittel, welche für eine Aufhängung der Trägerschicht an einer Gebäudewand geeignet sind. Auch kann es sich um Platzhalter handeln, welche entfernbar sind. Es kann sich beispielsweise um Hülsen für Befestigungsmittel handeln, beispielsweise Hülsen mit einem Innengewinde und/oder mit einer Aufnahmeaussparung für die Befestigungsmittel. Es ist möglich, die Befestigungsmittel erst nach dem Aushärten des restlichen Fassadenverbundsystems einzufügen, was eine verbesserte Halterung ergeben kann. Die Befestigungsmittel können beispielsweise Metall umfassen und/oder aus diesem bestehen, z.B. in Form von Metallhaken.

Die Trägerschicht ist vorzugsweise plattenförmig und kann in einer Ausgestaltung auch eine Trägerplatte darstellen. Es ist auch bevorzugt, wenn die mit der Trägerschicht, insbesondere der Trägerplatte, verbundene Seite der Frontplatte eine geringere Rauigkeit als die gegenüberliegende Seite der Frontplatte aufweist und/oder im Wesentlichen eben ist. Auf der der Frontplatte zugewandten Seite der Trägerschicht, insbesondere Trägerplatte, bildet sich vorzugsweise im Wesentlichen die Negativform der Rückseite der Frontplatte aus.

Ein Fassadenverbundsystem im Sinne der vorliegenden Erfindung ist ein Verbundsystem für Gebäudewände, vorzugsweise ein Verbundsystem, welches als vorgehängte Fassade einsetzbar ist. In einigen Ausgestaltungen ist es vorgesehen, dass das Fassadenverbundsystem ausgelegt und eingerichtet ist, mit mechanischen Fixierungsmitteln an Gebäudewände zur Ausbildung einer Fassadenfront angebracht zu werden. In einer zweckmäßigen Ausgestaltung besteht das Fassadenverbundsystem aus nicht mehr als sechs, insbesondere nicht mehr als vier, vorzugsweise nicht mehr als drei, Schichten, insbesondere bevorzugt genau drei Schichten.

Eine Viskosität im Sinne der vorliegenden Erfindung wird bei 23°C bestimmt, insbesondere als Einpunktmessung mit einem Brookfield CAP 2000 Kegel-Platte-Viskosimeter und/oder bei einem Luftdruck von 1 bar. Soweit auf eine Viskosität in der vorliegenden Erfindung Bezug genommen wird, bezieht sich dies auf eine Stoffeigenschaft vor dem Schritt 5) des Aushärtens. Eine Klassifizierung des Brandverhaltens im Sinne der vorliegenden Erfindung erfolgt gemäß DIN EN 13501-1:2010-01. Vorzugsweise wird die Schüttdichte nach DIN EN 1097-3:1998-06 bestimmt.

Der Pressdruck im Sinne der vorliegenden Erfindung ist der Druck den die Presse tatsächlich ausübt. Der Druck muss nicht gleichmäßig über die Fläche der Mischung, insbesondere Paste, verteilt sein. In einigen Bereichen kann eine Druckminderung eintreten, wenn beispielsweise Hohlkugeln und/oder Blähglas dort verstärkt zerstört wird und in anderen Bereichen ohne Zerstörung ist der Druck dann etwas höher. Der Pressdruck ist dabei der mittlere Druck den die Presse bezogen auf die Auflagefläche ausübt. Vorzugsweise ist der Pressdruck jener Druck, den die Frontplatte von der Vorderseite her und/oder Mischung, insbesondere Paste, im Mittel ausgesetzt ist.

Der Begriff Reaktionsharz wird im Sinne der vorliegenden Erfindung sowohl für die Ausgangsmischung als auch für die ausgehärtete Endmischung verwendet. Es handelt sich ferner um einen Oberbegriff für das erste und zweite Reaktionsharz, sofern keine nähere Spezifizierung erfolgt. Reaktionsharze, insbesondere erste und zweite Reaktionsharze, im Sinne der vorliegenden Erfindung können also mehr als einen Zustand einnehmen, insbesondere einen nicht ausgehärteten, insbesondere flüssigen, Zustand und einen ausgehärteten, insbesondere festen, Zustand. Mindestens ein nicht ausgehärtetes, insbesondere flüssiges, Reaktionsharz liegt vor dem Schritt 5) des Aushärtens vor und das finale Verbundsystem weist ausgehärtete Reaktionsharze auf. Spätestens nach Schritt 6) ist das Reaktionsharz bzw. sind die Reaktionsharze vorzugsweise vollständig ausgehärtet. Soweit also in den Schritte 1) bis 4) von Reaktionsharzen gesprochen sind, sind diese vorzugsweise nicht ausgehärtet. Soweit von Reaktionsharzen in der durch das Verfahren erhaltenen Trägerschicht gesprochen wird, sind diese in Schritt 5) ausgehärtet und liegen vorzugsweise fest und/oder elastisch vor. Die chemische Zusammensetzung im flüssigen Zustand ist vorzugsweise nicht identisch mit der Zusammensetzung im ausgehärteten Zustand, was darauf zurückzuführen ist, dass die Reaktionsharze sich beim Aushärten vorzugsweise chemisch verändern. Gleichwohl lassen sie sich auch im ausgehärteten Zustand am besten über die Ausgangsprodukte vor dem Aushärten charakterisieren.

Eine Form im Sinne der vorliegenden Erfindung ist vorzugsweise ein Behälter oder eine sonstige Aufnahmevorrichtung für die Frontplatte, wobei das erste und/oder zweite Reaktionsharz und der Füllstoff, insbesondere Leichtfüllstoff, hinzugegen werden können. Eine Pressform im Sinne der vorliegenden Erfindung ist vorzugsweise eine Form, welche ausgelegt und eingerichtet ist, in eine Presse eingeführt zu werden oder Bestandteil einer Presse ist, insbesondere wobei die Pressform dem Pressdruck der Presse standhält. Vorzugsweise hält die Presse mindestens einem Pressdruck von 1 N/mm², insbesondere mindestens 2 N/mm², besonders bevorzugt mindestens 3 N/mm² und ganz besonders bevorzugt mindestens 4 N/mm², stand. Oftmals gehört zu der Pressform eine Pressplatte, welche die Pressform verschließt und für eine bessere Druckverteilung sorgt. Zur Herbeiführung eines beschleunigten Herstellungsverfahrens mit kurzen Taktzeiten wird vorzugsweise auf eine Form mit sehr guter Wärmeleitfähigkeit zurückgegriffen. Hierbei kommen insbesondere solche Form, insbesondere Pressform, zum Einsatz, die aus einem Material gebildet sind mit einer Wärmeleitfähigkeit größer oder gleich 150 W/(m • K) und bevorzugt größer 200 W/(m • K). In einer besonders bevorzugten Ausführungsform des erfindungsgemäßen Verfahrens ist die Form aus Aluminium oder Kupfer oder einer Aluminiumlegierung oder einer Kupferlegierung gebildet.

Vorzugsweise ist der Pressdruck größer 1,0 N/mm², bevorzugt größer oder gleich 1,5 N/mm² und besonders bevorzugt größer 2,0 N/mm². Mit dem erfindungsgemäßen Verfahren wird der Füllstoff in Schritt 4) oder 5) vorzugsweise einem derart hohen Pressdruck ausgesetzt, dass der Füllstoff zumindest in Teilen in Bruchstücke zerteilt bzw. aufgebrochen wird, insbesondere wobei der Füllstoff Hohlkugeln und/oder Blähglas umfasst. Die Pressform kann in einer Ausgestaltung mit einer Pressplatte kombinierbar sein, insbesondere wobei die Pressplatte ein korrespondierendes Gegenstück zur besagten Pressform ist.

Vorzugsweise wird der Pressdruck so eingestellt und solange gehalten, bis die Mischung mit dem Füllstoff und dem zweiten Reaktionsharz um einen Faktor von 1,05 bis 3 im Volumen verdichtet werden, d.h. das Volumen der Mischung hat sich um den entsprechenden Faktor verringert. Als besonders geeignet hat sich eine Verringerung des Volumens besagter Mischung um den Faktor 1,1 bis 2, vorzugsweise um den Faktor 1,2 bis 1,8, erwiesen. Als besonders geeignet hat sich auch eine Verringerung der mittleren Schichtdicke besagter Mischung um den Faktor 1,1 bis 2, vorzugsweise um den Faktor 1,2 bis 1,8, erwiesen.

Eine Presse im Sinne der vorliegenden Erfindung ist vorzugsweise ausgelegt und eingerichtet, den Inhalt zusammenzupressen, insbesondere die Pressform und Pressplatte zu pressen und/oder aufeinander zu zu bewegen. Vorzugsweise handelt es sich um eine einfache Plattenpresse oder um eine Doppelstock-Plattenpresse. Vorzugsweise ist die Presse vorwärmbar, insbesondere auf die erste Aushärtetemperatur vorwärmbar. Unter dem Zusammenfahren einer Presse wird vorzugsweise verstanden, dass die pressenden Elemente der Presse, insbesondere Pressbacken und/oder Pressform und Pressplatte, aufeinander zu bewegt werden, vorzugsweise mittels eines Motors oder hydraulisch. Der Pressduck liegt in einer Ausgestaltung bei 10 bis 50 kg/cm², insbesondere 15 bis 30 kg/cm², insbesondere bevorzugt bei 20 bis 25 kg/cm².

Eine Frontplatte im Sinne der vorliegenden Erfindung ist vorzugsweise ausgelegt und eingerichtet, die äußerste Schicht eines Gebäudes auszubilden, d.h. sie bildet gattungsgemäß die Oberfläche einer mit der Frontplatte versehenden Gebäudewand eines fertiggestellten Gebäudes aus. In diesem Sinne ist eine Frontplatte vorzugsweise ausgelegt und eingerichtet, den Witterungsverhältnissen standzuhalten, beispielsweise Regen, Wind, Hagel und Sonneneinstrahlung. Vorzugsweise weist die Frontplatte zu diesem Zweck eine der Beschichtungsoberfläche gegenüberliegende frontseitige Außenoberfläche auf. Auch ist es in einer Ausgestaltung bevorzugt, wenn die Frontplatte hell gefärbt, insbesondere weiß gefärbt, und/oder reflektierend ist, um Sonnenenergie besser abzuführen. Dies verbessert den Energiehaushalt eines Gebäudes. Alternativ oder zusätzlich sind auch Frontplatten mit Solarzellen denkbar, welche Energie erzeugen sollen und dabei möglichst viel Sonnenenergie absorbieren.

In einer bevorzugten Ausgestaltung ist die Form, insbesondere Pressform, mit einer Antihaftfolie, insbesondere Teflonfolie, und/oder Antihaftmatte, insbesondere einer mit Teflon beschichtete Antihaftmatte, ausgestattet. Vorzugsweise wird diese vor Schritt 1) eingeführt. Alternativ oder zusätzlich wird eine Antihaftfolie, insbesondere Teflonfolie, zugegeben, bevor die Pressplatte aufgelegt wird. Dies erleichtert die Entnahme des finalen Fassadenverbundsystems. Die Antihaftfolie und/oder Antihaftmatte ist vorzugsweise elastisch. Ein Antihaftfolie bzw. eine Antihaftmatte im Sinne der vorliegenden Erfindung vermindert die Haftung des Fassadenverbundsystems in der Form, insbesondere wird die Entnahme gemäß Schritt 7) erleichtert. Die Antihaftfolie und/oder Antihaftmatte umfasst vorzugsweise eine Oberfläche, welche antihaftbeschichtet ist, insbesondere mit Polytetrafluorethylen.

In einer bevorzugten Ausgestaltung ist es vorgesehen, dass die Presse, insbesondere in Schritt 4), auf eine Vorwärmtemperatur vorerwärmt ist oder wird, insbesondere wobei die Vorwärmtemperatur näher an der ersten Aushärtetemperatur als an einer Raumtemperatur von 25°C ist und/oder wobei die Vorwärmtemperatur im Wesentlichen der ersten Aushärtetemperatur entspricht. Besagte Vorwärmtemperatur entspricht der ersten Aushärtetemperatur im Wesentlichen, wenn sie weniger als 20% kleiner oder weniger als 20% größer, vorzugsweise wenn sie weniger als 10% kleiner oder weniger als 10% größer, als die Vorwärmtemperatur ist. Sämtliche Temperaturbezüge in dieser Offenbarung beziehen sich dabei auf die Einheit °C. In einer zweckmäßigen Ausgestaltung des Herstellungsverfahrens ist es vorgesehen, dass die Presse auf die Vorwärmtemperatur vorerhitzt wird, insbesondere bevor die Einführung der Frontplatte in Schritt 1) in die Form, insbesondere Pressform, erfolgt. Dies führt überraschenderweise zu besseren Ergebnissen, insbesondere auch was die Verfahrensgeschwindigkeit betrifft. In zweckmäßigen Ausgestaltungen beträgt die Vorwärmtemperatur hierbei 30 bis 250°C, insbesondere 70 bis 200°C, vorzugsweise 100 bis 160°C, insbesondere bevorzugt 110 bis 140°C, ganz besonders bevorzugt 120 bis 130°C. Es hat sich gezeigt, dass trotz einer frühzeitigen Vorerwärmung in dieser Ausgestaltung eine ungleichmäßige Aushärtung verhindert werden kann und das Aushärten, insbesondere in Schritt 5), schnell und gleichmäßig erfolgt.

In einer weiteren Ausführungsform erfolgt das Erhitzen der Trägerschicht über eine beheizte Pressenseite, während die Frontplatte einseitig vorerhitzt wurde. Die Frontplatte muss nicht vollständig durchgewärmt sein. Es reicht überraschenderweise vollkommen, wenn die Seite, die später mit der Trägerschicht verbunden ist, nur an der Oberfläche heiß ist. Dies lässt sich in einem vorgelagerten Schritt durch Infrarotstrahlung erzielen. Der Vorteil dieser Variante ist eine schnellere Taktzeit und die Energieeinsparung durch Teilerhitzung der Frontplatte.

Das Aushärten in Schritt 5) erfolgt vorzugsweise unter Erwärmung oder Temperaturen deutlich oberhalb der Raumtemperatur bei einer ersten Aushärtetemperatur im Bereich von 30 bis 250°C, insbesondere von 70 bis 200°C, vorzugsweise von 100 bis 160°C, insbesondere bevorzugt von 110 bis 140°C, ganz besonders bevorzugt von 120 bis 130°C. Ein Nachhärten erfolgt vorzugsweise in Schritt 6) unter Erwärmung oder Temperaturen bei einer zweiten Aushärtetemperatur im Bereich von 10 bis 100°C, insbesondere von 20 bis 70°C, vorzugsweise von 25 bis 45°C.

Der Füllstoff umfasst vorzugsweise einen Leichtfüllstoff oder ist ein Leichtfüllstoff. Ein Leichtfüllstoff im Sinne der vorliegenden Erfindung ist ein Füllstoff, der eine Schüttdichte von weniger als 950 kg/m³, aufweist. Vorzugsweise wird ein, insbesondere mineralischer, Füllstoff, insbesondere Leichtfüllstoff, für das vorliegende Verfahren eingesetzt, der eine Schüttdichte von weniger als 800 kg/m³, insbesondere weniger als 600 kg/m³, insbesondere bevorzugt weniger als 500 kg/m³, ganz besonderes bevorzugt weniger als 400 kg/m³, aufweist. Vorzugsweise wird die Schüttdichte nach DIN EN 1097-3:1998-06 bestimmt. Geeignete Füllstoffe, insbesondere Leichtfüllstoffe, genügen in einer Ausführungsform auch den Anforderungen an leichte Gesteinskörnungen nach DIN EN 13055-1:2002-08.

Der Gewichtsanteil des Füllstoffs ist vorzugsweise größer als der Gewichtsanteil des zweiten Reaktionsharzes, insbesondere um ein Vielfaches größer, beispielsweise mindestens doppelt so groß, vorzugsweise mindestens dreimal so groß, insbesondere bevorzugt mindestens sechsmal so groß. Der Anteil an Füllstoff in der in Schritt 2) zugegebene Mischung, insbesondere Paste, beträgt vorzugsweise mindestens 40 Gew.-%, insbesondere mindestens 55 Gew.-%. Vorzugsweise ist der Gewichtsanteil des Füllstoffs nicht mehr als 99,5 Gew.-%, insbesondere nicht mehr als 95 Gew.-%.

In einer Ausgestaltung umfasst der Füllstoff, insbesondere Leichtfüllstoff, ein expandiertes Vulkangestein, insbesondere besteht aus diesem. Alternativ oder zusätzlich ist es bevorzugt, wenn der Füllstoff, insbesondere Leichtfüllstoff, ein Aluminiumsilikat und/oder Mineralhohlkugeln, insbesondere Silikat-Hohlkugeln, vorzugsweise Alumosilikat-Hohlkugeln, umfasst, insbesondere aus diesen besteht. Als besonders geeignet hat sich überraschenderweise aufgeschäumtes Glas, insbesondere geschäumtes Blähglas und/oder Blähglasgranulate, als Füllstoff, insbesondere Leichtfüllstoff, erwiesen. Geschäumtes Blähglas und/oder Blähglasgranulate nehmen weniger von dem Bindemittel auf als andere Füllstoffe, insbesondere Leichtfüllstoffe, so dass hier eine besondere Effizienz erreicht wurde und der Anteil an dem zweiten Reaktionsharz gering gehalten werden kann. Vorzugsweise ist es vorgesehen, dass der Füllstoff rund oder ovioid, wärmedämmend, nicht brennbar, schalldämmend, druckstabil, bruchkornfrei, säurebeständig und/oder schädlingssicher ist. In einer Ausgestaltung ist der Füllstoff ausgewählt aus einer Gruppe bestehend aus Blähton, Blähschiefer, z.B. expandiertes Glimmerschiefergranulat, Silikat-Hohlkugeln, insbesondere Hohlglaskugeln, Hohlkeramikkugeln, Mineralblähglas, z.B. geschäumtes Blähglas und/oder Blähglasgranulate, Blähperlite, Blähglimmer, insbesondere geblähtes oder geschäumtes Vermiculit, Lavaschlacke, Tuff oder Bims oder deren beliebige Mischungen.

Mit dem vorzugsweise vorgesehenen ersten Reaktionsharz in Schritt 1) wird eine besonders sichere und feste Haftung gewährleistet. Auch ohne den ersten Reaktionsharz in Schritt 1) ist es grundsätzlich möglich, nur das zweite Reaktionsharz für eine Anbindung an die Frontplatte zu nutzen. Allerdings hat sich überraschenderweise gezeigt, dass besonders gute Ergebnisse erzielt werden, wenn zuvor ein erstes Reaktionsharz aufgebracht wurde. Dies ist insbesondere dann der Fall, wenn die zu benetzende Frontplatte uneben, rau und/oder saugfähig ist.

Das erste Reaktionsharz in Schritt 1) liegt vorzugsweise als Primer vor.

In einer Ausgestaltung ist es vorgesehen, dass die Schicht des ersten Reaktionsharzes, insbesondere Primers, nicht aufgetragen wird (Schichtdicke von o mm) und/oder beim Auftragen geringer als 900 µm, insbesondere geringer als 700 µm, vorzugsweise geringer als 500 µm, ganz besonders bevorzugt geringer als 300 µm, ist. Schichtdicken von 50 bis 500 µm, insbesondere 75 bis 300 µm, insbesondere bevorzugt 100 bis 200 µm, haben sich als besonderes geeignet erwiesen. Wenn das erste Reaktionsharz so dünn aufgetragen wird oder ein vollständiger Verzicht erfolgt, werden interne Spannungen in erheblichem Maße verringert.

Die relativ dicke Kleberschichten beim Verbinden zweiter herkömmlicher Platten führen zu höheren Spannungen innerhalb der Platten, da sich die Ausdehnungskoeffizienten der Materialien deutlich unterscheiden. Vorliegend sind jedoch nur die Ausdehnungskoeffizienten der Trägerschicht und der Frontplatte maßgeblich. Diese sind sich sehr viel ähnlicher als der Ausdehnungskoeffizient des ersten und/oder zweiten Reaktionsharzes im Vergleich zur Frontplatte.

Es kann alternativ oder zusätzlich zweckmäßig sein, die Frontplatte noch vor Schritt 1) mit einem alternativen oder zusätzlichen Primer zu bestreichen, insbesondere bei saugfähigen Frontplatten. Wenn die Oberfläche dieser Frontplatte derart ausgestaltet ist, dass das erste verwendete Reaktionsharz darin eindringen kann, kann durch die Verwendung eines, insbesondere anorganischen, Primers die benötigte Reaktionsharzmenge reduziert werden. Vorzugsweise handelt es sich um anorganische Primer, Primer auf Dispersionsbasis und/oder Primer auf Reaktionsharzbasis. In einer Ausgestaltung umfasst der Primer Wasserglas Polymethylmethacrylat, Styrol-Butadien-Acrylat und/oder mindestens ein Epoxidharz. Als besonders geeignet hat sich dabei ein Primer umfassend oder bestehend aus Wasserglas erwiesen.

In einigen Ausgestaltungen ist es bevorzugt, wenn das erste und/oder zweite Reaktionsharz beim Aufbringen in Schritt 1) bzw. beim Einfüllen in Schritt 2) eine Viskosität bei 23°C von weniger als 1000 mPa*s, insbesondere weniger als 500 mPa*s, vorzugsweise weniger als 300 mPa*s, insbesondere bevorzugt weniger als 200 mPa*s aufweist. Es hat sich gezeigt, dass die Auftragung des ersten Reaktionsharzes in Schritt 1) bei dieser Viskosität besonders effizient, d.h. in geringe Schichtdicke und homogen auf der Beschichtungsoberfläche möglich ist. Dies vereinfacht und beschleunigt das Verfahren. Solche Epoxidharze sind besonders geeignet, die im ausgehärteten Zustand über eine Glasübergangstemperatur von mindestens 60°C, bevorzugt von mindestens 70°C, besonders bevorzugt von mindestens 80 °C, verfügen.

In einigen zweckmäßigen Ausgestaltungen ist das, insbesondere flüssige, erste und/oder zweite Reaktionsharz in Schritt 1) und/oder 2) eine Mischung mit einer, insbesondere flüssigen, ersten Reaktionsharzkomponente und einer, insbesondere flüssigen, zweiten Reaktionsharzkomponente, welche vor dem Auftragen miteinander vermengt werden. Die erste Reaktionsharzkomponente umfasst vorzugsweise ein Epoxidharz und die zweite Reaktionsharzkomponente einen Härter.

Vorzugsweise wird das erste und/oder zweite Reaktionsharz als, insbesondere nicht ausgehärtete und flüssige, Mischung mit einem Epoxidharz als erste Reaktionsharzkomponente und einem Härter, insbesondere einem Amin, als zweite Reaktionsharzkomponente gleichzeitig oder nacheinander in die Form gegeben. In einer Ausgestaltung werden die erste und zweite Reaktionsharzkomponente kurz vor und/oder während der Durchführung der Schritt 1) und/oder 2) vermengt. Vorzugsweise werden die erste und zweite Reaktionsharzkomponente in Schritt 1) und/oder 2) zuerst vermischt und aufgetragen bzw. eingefüllt. Hierbei ist zu beachten, dass die Komponenten beim Auftragen bzw. Einfüllen noch nicht ausgehärtet sein sollen. Dies lässt sich über die Temperatur und die Zeitdauer bis zum Auftragen bzw. Einfüllen kontrollieren. Üblicherweise werden die Reaktionsharzkomponenten beispielsweise bei Raumtemperatur vermischt und dann ohne Wartezeit aufgetragen bzw. eingefüllt, wie dies in den Schritte 1) und 2) beschrieben ist.

Vorzugsweise liegt mehr von der ersten als von der zweiten Reaktionsharzkomponente in dem ersten Reaktionsharz vor, insbesondere mindestens doppelt, vorzugsweise mindestens dreimal so viel bezogen auf das Gewicht. Es hat sich gezeigt, dass es besonders bevorzugt ist, wenn die Gesamtmenge der ersten Reaktionsharzkomponente zweimal bis fünfmal, insbesondere dreimal bis viermal so groß ist, wie die Gesamtmenge der zweiten Reaktionsharzkomponente. Das Gewichtsverhältnis von erster Reaktionsharzkomponente zur zweiten Reaktionsharzkomponente wird in einigen Ausgestaltungen im Bereich von 200 : 30 bis 50 : 30, vorzugsweise im Bereich von 150 : 30 bis 75 : 30, eingestellt.

Vorzugsweise ist oder umfasst die, insbesondere flüssige, erste Reaktionsharzkomponente ein, insbesondere auf Bisphenol basierendes, Epoxidharz. Im Sinne der Erfindung soll der Begriff "Epoxidharz" ein Epoxidgruppen enthaltendes Reaktionsharz bedeuten. Ein solches Reaktionsharz stellt ein flüssiges oder verflüssigbares Harz, das mit Reaktionsmitteln wie Härter, Beschleuniger und dergleichen ohne Abspaltung flüchtiger Verbindungen durch Polyaddition härtet, dar. Bevorzugt sind Epoxidharze, die gebildet sind aus den Komponenten Bisphenol, insbesondere Bisphenol A und/oder Bisphenol F, und mindestens einer Epoxidverbindung, insbesondere Epichlorhydrin. Besonders bevorzugt wird hierbei auf ein Gemisch aus Bisphenol A und Bisphenol F zurückgegriffen. Es können auch weitere Bisphenole entweder einzeln oder im Gemisch, insbesondere mit Bisphenol A und/oder Bisphenol F, eingesetzt werden. Geeignete Bisphenole umfassen hierbei unter anderem Bisphenol AF, Bisphenol B, Bisphenol C und Bisphenol E. In einer besonders zweckmäßigen Ausführungsform stellt das Epoxidharz ein Diglycidylether von Bisphenol A oder von Bisphenol F oder einem Gemisch davon dar.

Vorzugsweise ist oder umfasst die zweite Reaktionsharzkomponente einen Härter, insbesondere ein Amin, insbesondere bevorzugt ein aromatisches oder aliphatisches Amin. Für geeignete Epoxidharz-Härter greift man z.B. auf Amin-Härter, insbesondere ausgewählt aus der Gruppe bestehend aus Diaminen, Triaminen, Tetraaminen, aliphatischen Polyaminen und aromatischen Polyaminen oder deren beliebigen Mischungen, z.B. Aminoethylpiperazin (AEP), 1,3-Benzoldimethanamin (MXDA) und/oder Isophorondiamin (IPDA), und/oder mindestens zurück. Unter den Amin-Härtern kommen auch Amin-Addukte, Polyamin-Addukte, Polyoxyalkylendiamin, Polyamidoamin, Mannich-Basen, hergestellt durch Kondensation von einem Phenol, einem Amin und Formaldehyd, und transaminierte Mannich-Basen in Betracht. Als geeignet haben sich beispielsweise 1,3-Diaminobenzol und Diethylentriamin erwiesen.

Auch können als zweite Reaktionsharzkomponente saure Härter, insbesondere Dicarbonsäureanhydride, z.B. Hexahydrophthalsäureanhydrid, eingesetzt werden.

In einer Ausgestaltung ist oder umfasst die zweite Reaktionsharzkomponente ein flüssiges aliphatisches Polyamin und/oder ein flüssiges aliphatisches Polyamidoamin. Diese sind insbesondere für die Härtung bei Raumtemperatur, die sogenannte Kalthärtung geeignet. Für die sogenannte Warmhärtung, die regelmäßig bei Temperaturen oberhalb von 80°C durchgeführt wird, greift man bevorzugt auf aromatische Amine oder auf die sauren Härter, beispielsweise Anhydride der Phthalsäure zurück.

Die geschilderten Epoxidharz-Härter können in gleicher Weise zur Aushärtung von Reaktiwerdünnern bzw. von Gemischen aus Epoxidharz und Reaktiwerdünner eingesetzt werden. Mit den Epoxidharz-Härtern lassen sich die Verarbeitungseigenschaften des auszuhärtenden bzw. aushärtenden Epoxidharzes steuern, z.B. die Verarbeitungs- und Aushärtungszeit einstellen.

Neben dem für das Verfahren zur Verfügung gestellten Epoxidharz, oder auch alternativ, kann mindestens ein sogenannter Reaktivverdünner zu- bzw. eingesetzt werden. Mit diesem Reaktivverdünner kann die Viskosität von Epoxidharzen, beispielsweise auf Basis von Bisphenolen, verringert werden. Reaktivverdünner dienen hauptsächlich dazu, die Verarbeitungsviskosität, Topfzeit und/oder die Benetzung von Füllstoffen zu manipulieren. "Reaktivvrdünner" im Sinne der Erfindung stellen demgemäß in einer Ausgestaltung des Verfahrens viskositätssenkende Stoffe dar, die bei der Härtung des Reaktionsharzes chemisch in das Harz eingebaut werden. Reaktivverdünner für Epoxidharze sind somit Epoxidgruppen enthaltende Verbindungen niedriger Viskosität. Geeignete Reaktivverdünner umfassen daher im Allgemeinen molekulare flüssige epoxyfunktionelle Verbindungen in Form von mono- und Diglycidylethern. Als Reaktivverdünner finden z.B. Verwendung Glycidylether von aliphatischen, alicyclischen oder aromatischen Mono- oder insbesondere Polyalkoholen Verwendung, wie Monogylcidylether, z.B. o-Kresylglycidylether, und/oder insbesondere Glycidylether mit einer Epoxid-Funktionalität von mindestens 2, wie 1,4-Butandioldiglycidylether, Cyclohexandimethanoldiglycidylether, Hexandioldiglycidylether und/oder insbesondere Tri- oder höhere Glycidylether, z.B. Glycerintriglycidylether, Pentaerythrittetraglycidylether oder Trimethylolpropantriglycidylether, oder ferner Mischungen von zwei oder mehr dieser Reaktivverdünner, vorzugsweise Triglycidylether, besonders bevorzugt als Gemisch aus 1,4-Butandioldiglycidylether und Trimethylolpropantriglycidylether. Bei einem Zweikomponentensystem aus Epoxidharz und Epoxidharz-Härter sollte der Reaktivverdünner vor dem Vermischen vorzugsweise nicht in der zweiten Reaktionsharzkomponente vorliegen, sondern nur in der ersten Reaktionsharzkomponente. Geeignete Reaktivverdünner verfügen in einer zweckmäßigen Ausgestaltung über nur eine einzige Epoxidgruppe, z.B. monofunktionelle Glycidylether auf Basis eines aliphatischen und aromatischen Alkohols. Exemplarisch seien para-tert-Butylphenylglycidylether, n-Butylglycidylether, Phenylglycidylether, ortho-Kresylglycidylether, C₁₂-C₁₄-Glycidylether und 2-Ethylhexylglycidylether, genannt, wobei para-tert-Butylphenylglycidylether unter diesen bevorzugt ist.

Vorzugsweise umfasst das erste Reaktionsharz dieselbe erste und/oder zweite Reaktionsharzkomponente wie das zweite Reaktionsharz. Das zweite Reaktionsharz hat in einer Ausgestaltung eine ganz oder teilweise identische Zusammensetzung wie das erste Reaktionsharz.

Vorzugsweise umfasst die in Schritt 2) zugegebene Mischung, insbesondere Paste, auch einen Hydrophobierer bzw. Hydrophobierungsmittel, insbesondere mindestens ein Silan und/oder Siloxan. Vorzugsweise ist der Hydrophobierer ausgelegt und eingerichtet, mit Wasser unter Abspaltung eines Alkohols zu reagieren.

In einer bevorzugten Ausgestaltung weist die Beschichtungsoberfläche Unebenheiten, insbesondere Vertiefungen, auf und in Schritt 1) dringt das erste Reaktionsharz in die Unebenheiten ein und/oder in Schritt 2) dringt das zweite Reaktionsharz in die Unebenheiten ein.

In einer Ausgestaltung des Verfahrens ist die in Schritt 2) zugegebene Mischung überwiegend lösungsmittelfrei. Vorzugsweise ist der Anteil an Lösungsmittel - sofern welches vorhanden ist - kleiner als 25 Gew.-%, insbesondere kleiner als 10 Gew.-%, insbesondere bevorzugt kleiner als 5 Gew.-%, ganz besonderes bevorzugt kleiner als 1 Gew.-%. Vorzugsweise ist der Anteil an Lösungsmittel in der Form in jedem der Verfahrensschritte kleiner als die genannten Mengen bezogen auf sämtliche in dem Verfahren in die Form gegebenen Inhaltstoffe, insbesondere einschließlich des ersten und zweiten Reaktionsharzes, dem Füllstoff, der Fotoplatte und sonstigen Komponenten. Vorzugsweise umfasst das erste und/oder zweite Reaktionsharz weniger als 20 Gew.-% Lösungsmittel, insbesondere weniger als 10 Gew.-% Lösungsmittel, insbesondere bevorzugt weniger als 5 Gew.-% Lösungsmittel, ganz besonderes bevorzugt weniger als 1 Gew.-% Lösungsmittel. In einer Ausgestaltung kann das erste und/oder zweite Reaktionsharz frei von Lösungsmitteln sein.

Auch ist es bevorzugt, wenn die erste Aushärtezeitdauer in Schritt 5) 20 bis 10.000 Sekunden, insbesondere 40 bis 4.000 Sekunden, vorzugsweise 100 bis 2.000 Sekunden, insbesondere bevorzugt 150 bis 1.000 Sekunden und ganz besonderes bevorzugt 200 bis 800 Sekunden beträgt. Es hat sich gezeigt, dass selbst bei relativ kurzen Aushärtezeiten eine hinreichende Aushärtung erzielt wird. Dies beschleunigt das Verfahren ganz erheblich. Auch ist es bevorzugt, wenn die zweite Aushärtezeitdauer in Schritt 6) länger als die erste Aushärtezeitdauer ist, insbesondere mindestens doppelt, vorzugsweise mindestens zehnmal so lang.

Vorzugsweise ist es vorgesehen, dass die erste Aushärtetemperatur in Schritt 5) 30 bis 250°C, insbesondere 70 bis 200°C, vorzugsweise 100 bis 160°C, insbesondere bevorzugt 110 bis 140°C, ganz besonders bevorzugt 120 bis 130°C, beträgt. Besagte Temperaturen haben sich als besondere geeignet für ein rasches und effizientes Aushärten erwiese, ohne eine zu hohe thermische Belastung darzustellen.

In einer Ausgestaltung ist es vorgesehen, dass der Füllstoff, insbesondere das Blähglas, ganz oder teilweise beim Pressen in Schritt 4) zerstört wird. Es hat sich gezeigt, dass dies einen besonders guten inneren Zusammenhalt bewirken kann. Vorzugsweise ist der Pressdruck derart eingestellt wird, dass mindestens ein Teil des Füllstoffmaterials in der Pressform in Bruchstücke zerkleinert wird und wobei diese Zerkleinerung stattfindet, bevor und/oder während das Epoxidharz und/oder der Reaktivverdünner aushärtet.

In ein bevorzugten Ausgestaltung des erfindungsgemäßen Herstellungsverfahrens ist es vorgesehen, dass in Schritt 1) weniger als 1,6 kg/m², insbesondere weniger als 0,8 kg/m², vorzugsweise weniger als 0,4 kg/m², insbesondere bevorzugt weniger als 0,25 kg/m² des ersten Reaktionsharzes auf die Beschichtungsoberfläche der Frontplatte aufgetragen wird. Es hat sich überraschenderweise gezeigt, dass auch mit wenig erstem Reaktionsharz eine hervorragende Anbindung erzielt wird. Durch den Einsatz von weniger erstem Reaktionsharz wird eine kontrollierte Anbindung ermöglicht und die homogene Verteilung erleichtert.

In einer Ausgestaltung wird in Schritt 1) noch ein Fasermaterial hinzugegeben oder ist in das erste Reaktionsharz eingebettet. Hierbei kann es sich beispielsweise um Fasermaterial mit Gewebefasern handeln. Als besonders geeignet haben sich Glasfasern und/oder Carbonfasern erwiesen, insbesondere vereinzelte und/oder unzusammenhängende Glasfasern, Carbonfasern oder entsprechende Fasermatten. Vorzugsweise ist die mit den Fasern ausgebildete Schichtdicke geringer als 2 mm, insbesondere geringer als 1 mm.

Auch ist es bevorzugt, wenn in Schritt 1) der, insbesondere flächenbezogene, Brennwert des ersten Reaktionsharzes auf der Beschichtungsoberfläche der Frontplatte weniger als 16 MJ/m² beträgt, insbesondere weniger als 8 MJ/m², insbesondere bevorzugt weniger als 4 MJ/m², ganz besonderes bevorzugt kleiner gleich als 3 MJ/m². Dies kann durch die Wahl der Art des Reaktionsharzes, über darin enthaltene Füllstoffe und der Menge an Reaktionsharz pro Fläche eingestellt werden. Überraschenderweise ist auch bei einem, insbesondere flächenbezogenen, Brennwert des ersten Reaktionsharzes von weniger als 3 MJ/m² eine gute Anbindung möglich und gleichzeitig wird die Brandsicherheit verbessert. Vorzugsweise wird der, insbesondere flächenbezogene, Brennwert dabei nach DIN EN ISO 1716:2010-11 ermittelt.

Vorzugsweise ist es vorgesehen, dass der Füllstoff, insbesondere Leichtfüllstoff, ganz oder überwiegend eine Korngröße von weniger als 5 mm, insbesondere weniger als 2 mm, vorzugsweise weniger als 1 mm, auf Grundlage von Messungen nach DIN EN 993-1:2017-04 aufweist. Vorzugsweise ist es vorgesehen, dass der Füllstoff, insbesondere Leichtfüllstoff, ganz oder überwiegend eine Korngröße von mehr als 0,1 mm, insbesondere mehr als 0,2 mm, vorzugsweise mehr als 1 mm, auf Grundlage von Messungen nach DIN EN 993-1:2017-04 aufweist. Eine besonders geeignete Korngröße liegt im Bereich von 0,25 bis 0,5 mm und eine weitere besonders geeignete Korngröße im Bereich von 0,5 bis 1 mm. Besagte mittlere Korngrößen haben sich als besonders geeignet erwiesen, um in Verbindung mit dem zweiten Reaktionsharz mechanisch widerstandsfähige Trägerschichten zu erzeugen. Die so erhaltenen Trägerschichten sind vorzugsweise elastisch. Hierbei kann z.B. auch auf solche Füllstoffe zurückgegriffen werden mit einer Korngröße, auch Korngruppe genannt, im Bereich von 0,1 bis 0,3 mm, 0,1 bis 0,6 mm, 0,1 bis 0,9 mm, 0,25 bis 0,5 mm, 0,25 bis 1,0 mm, 0,25 bis 1,5 mm, 0,5 bis 1,0 mm, 0,5 bis 2,0 mm, 0,5 bis 3,0 mm, 1,0 bis 2,0 mm, 1,0 bis 4,0 mm, 1,0 bis 6,0 mm, 2,0 bis 4,0 mm, 2,0 bis 8,0 mm, 2,0 bis 12,0 mm, 4,0 bis 8,0 mm, 4,0 bis 12,0 mm, 4,0 bis 16,0 mm, 8,0 bis 16,00 mm oder 8,0 bis 16,0 mm. Bevorzugt sind die Korngruppen 0,1 bis 0,3 mm, 0,25 bis 0,5 mm, 0,5 bis 1,0 mm, 1,0 bis 2,0 mm, 2,0 bis 4,0 mm, 4,0 bis 8,0 mm oder 8,0 bis 16,0 mm. In einer bevorzugten Ausführungsform unterscheidet sich die Kornobergrenze von der Kornuntergrenze maximal um den Faktor 4, besonders bevorzugt maximal um den Faktor 3 und insbesondere maximal um den Faktor 2. Selbstverständlich können auch solche Materialien eingesetzt werden, bei denen die Kornuntergrenze und die Kornobergrenze sich beispielsweise mindestens um den Faktor 5 oder mindestens um den Faktor 10 unterscheiden. Bei Festlegung des für den erfindungsgemäßen Baukörper zu verwendenden Teilchengrößenbereichs bzw. bei Festlegung der Kornklasse liegen in der Regel eine sogenannte Unterkorn- und eine sogenannte Oberkornfraktion vor. Das heißt der größte Teil der Füllstoffpartikel verfügt über eine Korngröße/Partikelgröße, die im vorangehend angegebenen Bereich der Kornklassen liegt. Für die Bestimmung der vorangehend beschriebenen Korngruppen kann auch auf die Norm DIN EN 993-1:2017-04 zurückgegriffen werden. Bevorzugt liegen bei einem der vorangehend genannten Teilchengrößenbereiche/Kornklassen maximal 15 Gew.-%, bevorzugt maximal 10 Gew.-% und besonders bevorzugt maximal 5 Gew.-%, der Füllstoffpartikel mit einer Teilchengröße oberhalb der oberen Bereichsgrenze/Korngrenze und/oder maximal 20 Gew.-96, bevorzugt maximal 15 Gew.-% und besonders bevorzugt maximal 10 Gew.-% der Füllstoffpartikel mit einer Teilchengröße unterhalb der unteren Bereichsgrenze/Korngrenze vor. Selbstverständlich können auch beliebige Mischungen an Korngruppen, wie vorangehend beschrieben, als poröse partikuläre anorganische Füllstoffmaterialien eingesetzt werden.

Die Korngruppe wird im Allgemeinen durch die Angabe von zwei Siebgrößen (Größen der Begrenzungssiebe) definiert, z.B. die Korngruppe 2,0 bis 4,0 mm, auch 2/4 mm genannt. Dabei wird das untere Begrenzungssieb regelmäßig mit "d" (Nenn-Kleinstkorn) und das obere mit "D" (Nenn-Größtkorn) bezeichnet. In dem genannten Beispiel der Korngruppe 2,0 bis 4,0 mm ist "d" = 2 mm und "D" = 4 mm. In jeder Korngruppe liegen häufig noch Überkorn-Anteile (Anteile > D) und Unterkorn-Anteile (Anteile < d) vor. Demgemäß ist das für die Bezeichnung der Korngruppe angegebene Nenn-Kleinstkorn nicht das in der Korngruppe enthaltene kleinste Korn; ebenso ist das für die Bezeichnung der Korngruppe angegebene Nenn-Größtkorn nicht das größte Korn einer Korngruppe angegebene Korn. Mit anderen Worten: In einer Korngruppe sind auch kleinere Körner enthalten als das Nenn-Kleinstkorn und auch größere Körner als das Nenn-Größtkorn. Für die Siebgrößen kann auf die Werte des Grundsiebsatzes oder die Werten des Grundsiebsatzes und der Ergänzungssiebsätze 1 oder 2 gemäß der DIN EN 13055-1:2002-08 zurückgegriffen werden. Der Grundsiebsatz umfasst hierbei die Siebgrößen: 0, 1, 2, 4, 8, 16, 31,5 und 63 mm. Der Ergänzungssiebsatz 1 enthält zusätzlich die Siebgrößen 5,6, 11,2, 22,4 und 45 mm. Der Ergänzungssiebsatz 2 enthält zusätzlich zum Grundsiebsatz die Siebgrößen 6,3, 10, 12,5, 14, 20 und 40 mm. Die Bereichsgrenzen in Form von nicht-ganzen Zahlen werden häufig auch gerundet wiedergegeben.

Der gewichtsbezogene Brennwert des Fassadenverbundsystems ist vorzugsweise kleiner oder gleich 3 MJ/kg bestimmt nach DIN EN ISO 1716:2010-11.

Auch ist es bevorzugt, wenn die Frontplatte mindestens einen nichtmetallischen, anorganischen Werkstoff umfasst und vorzugsweise überwiegend oder vollständig aus diesem besteht, vorzugsweise ein nichtmetallischer, anorganischer Werkstoff ausgewählt aus einer Gruppe bestehend aus Glas, insbesondere Einscheibensicherheitsglas, Stein, insbesondere Naturstein, Keramik, anorganischem Bindemittel, insbesondere Zement, und vorzugsweise auch Mischungen derselben. Es kann sich beispielsweise um eine Platte bestehend aus dem anorganischen Bindemittel handeln, insbesondere eine Zementplatte. Besonders bevorzugt sind Glasplatten, Steinplatten, Keramikplatten oder Zementplatten, wobei die Platten jeweils gänzlich oder überwiegend, d.h. zu mindestens 50 Gew.-%, aus den entsprechenden Werkstoffen bestehen. Besonders geeignet sind dabei Einscheibensicherheitsglas, Naturstein und Keramik. Besagte Werkstoffe sind zwar teilweise spröde, allerdings werden in Verbindung mit der Trägerschichte überraschend robuste Fassadenverbundsysteme erhalten.

In einer besonderen Ausgestaltung umfasst die Frontplatte eine Mischung mit einem nichtmetallischen anorganischen Werkstoff, insbesondere Füllstoff, der bevorzugt mit organischen Bindemitteln verbunden ist. Diese Frontplatte erfüllt vorzugsweise die Anforderungen an die Nichtbrennbarkeit nach DIN EN 13501:2010-01 A2 bzw. A1 und/oder ist mit spanend abhebenden Werkzeugen bearbeitbar, insbesondere einer Fräse. In einer weiteren Ausführung wird die Oberfläche, insbesondere Sichtfläche, der Frontplatte verändert, insbesondere dreidimensional moduliert, nachdem der Verbundkörper ausgehärtet ist, vorzugsweise durch schleifen, fräsen, polieren und/oder glätten. In einem späteren weiteren Schritt kann diese Oberfläche beschichtet werden, zum Beispiel mit einer Schutzbeschichtung und/oder einer Farbbeschichtung,

Vorzugsweise ist die Frontplatte in einer Ausgestaltung monolithisch ausgebildet, beispielsweise als plattenförmiger monolithischer Quader, insbesondere wobei die Dicke des Quaders um mindestens den Faktor 5, vorzugsweise um mindestens den Faktor 10, insbesondere bevorzugt um mindestens den Faktor 20, kleiner ist als seine Höhe und seine Breite. Auch ist es bevorzugt, wenn die Frontplatte mindestens eine Breitseite mit größerer Flächenausdehnung als, abgesehen von der gegenüberliegenden Breitseite, die anderen Seiten aufweist, welche vollflächig eben ist, insbesondere keine Aussparungen umfasst, soweit diese nicht herstellungsbedingt unvermeidbar sind.

Auch kann es in einer Ausgestaltung vorgesehen sein, dass die Frontplatte zusätzliche Funktionsbauteilte umfasst wie zum Beispiel Sensoren, Leuchtmittel, insbesondere LED, OLED, Bildwiedergabemodule, Kameras, Gegensprechanlagen, Lautsprecher und/oder Photovoltaikzellen. Besonders bevorzugt umfasst die Frontplatte Sensoren und/oder Leuchtmittel und/oder Photovoltaikzellen. Hierbei ist es besonders bevorzugt, wenn in die Trägerschicht in Schritt 2) Komponenten für den Betrieb der Funktionsbauteile eingebettet werden, insbesondere Leitungen und Steckersysteme.

Vorzugsweise ist es vorgesehen, dass die Frontplatte eine mittlere Schichtdicke von 4 bis 30 mm, insbesondere von 6 bis 20 mm, vorzugsweise von 8 bis 12 mm, aufweist. Vorzugsweise ist es vorgesehen, dass die Trägerschicht eine mittlere Schichtdicke von 4 bis 140 mm, insbesondere von 8 bis 70 mm, vorzugsweise von 12 bis 35 mm, aufweist. Vorzugsweise ist es vorgesehen, dass die Pressform in Schritt 4) soweit zusammengefahren wird, dass besagte mittlere Schichtdicke von 4 bis 140 mm, insbesondere von 8 bis 70 mm, vorzugsweise von 12 bis 35 mm, für die Trägerschicht resultiert. In einer besonders bevorzugten Ausgestaltung weist die Trägerschicht eine höhere mittlere Schichtdicke als die Frontplatte auf, insbesondere eine Schichtdicke, die mindestens um den Faktor 1,2, vorzugsweise mindestens um den Faktor 1,4, dicker ist. Auch ist es bevorzugt, wenn besagter Faktor nicht größer als 10, vorzugsweise nicht größer 5, insbesondere bevorzugt nicht größer 3, ist. Es hat sich gezeigt, dass eine solche Trägerschicht das Fassadenverbundsystem optimal stabilisiert, wobei zu hohe mittlere Schichtdicken nachteilig für die Sicherheit sind, insbesondere wenn die Trägerschicht anteilig zu schwer wird.

Auch ist es bevorzugt, wenn die Beschichtungsoberfläche und/oder eine Oberfläche der Trägerschicht mindestens eine Größe von 0,04 m², bevorzugt von mindestens 0,2 m², insbesondere mindestens 0,5 m², vorzugsweise mindestens 1 m², insbesondere bevorzugt mindestens 4 m², ganz besonderes bevorzugt mindestens 8 m², aufweist. Ferner ist es bevorzugt, wenn die Beschichtungsoberfläche und besagte Oberfläche der Trägerschicht im Wesentlichen gleich groß sind, insbesondere zwei im Wesentlichen gleich große gegenüberliegende Oberflächen. Sie sind als im Wesentlichen gleich groß anzusehen, wenn die größere der beiden Oberflächen nicht mehr als 20%, insbesondere nicht mehr als 10%, größer als die kleinere Oberfläche ist.

In einer zweckmäßigen Variante des Herstellungsverfahren ist es vorgesehen, dass das in Schritt 7) erhaltene Fassadenverbundsystem ein Brandverhalten der Klassifizierung A2 - s1 do oder A1 gemäß DIN EN 13501-1:2010-01 aufweist. Die kann erreicht werden, indem die Zusammensetzung und Mengenverhältnisse ggf. des ersten Reaktionsharzes, des zweiten Reaktionsharzes, des Füllstoff, insbesondere Leichtfüllstoffs, und der Trägerschicht entsprechend gewählt werden. Mit besagter Klassifizierung wurden überraschenderweise besonders gute Ergebnisse erzielt, insbesondere wurden weniger brüchige und trotzdem brandsicherere Platten erhalten, als wenn eine andere Klassifizierung verwendet wurde.

Auch ist es bevorzugt, wenn das Auftragen des ersten Reaktionsharzes auf die Beschichtungsoberfläche der Frontplatte in Schritt 1) des Herstellungsverfahrens so homogen erfolgt, dass die Schichtdicke des ersten Reaktionsharzes, insbesondere der Lage des ersten Reaktionsharzes, für einen überwiegenden Abschnitt der Beschichtungsoberfläche, insbesondere für einen Abschnitt der Beschichtungsoberfläche, der mindestens 90% der Beschichtungsoberfläche ausmacht oder für die gesamte Beschichtungsoberfläche, zwischen einer maximalen, insbesondere lokalen, Schichtdicke in diesem Abschnitt und einer minimalen, insbesondere lokalen, Schichtdicke in diesem Abschnitt, variieren kann, wobei die Differenz zwischen minimaler und maximaler Schichtdicke weniger als 1 mm, vorzugsweise weniger als 0,5 mm, insbesondere bevorzugt weniger als 0,1 mm, ganz besonders bevorzugt weniger als 0,05 mm, beträgt. Überraschenderweise hat die besonders homogene Auftragung einen nicht unerheblichen Einfluss auf die Haftwirkung. Es hätte auch sein können, dass dieser Effekt gänzlich aufgrund des Aneinanderdrückens in der Presse vernachlässigbar ist. Dies ist jedoch überraschenderweise nicht der Fall.

Auch ist es bevorzugt, wenn in Schritt 1) des Herstellungsverfahrens das Auftragen des ersten Reaktionsharzes auf die Beschichtungsoberfläche der Frontplatte so dünn erfolgt, dass die mittlere Schichtdicke des Reaktionsharzes für einen überwiegenden Abschnitt der Beschichtungsoberfläche, insbesondere für einen Abschnitt der Beschichtungsoberfläche, der mindestens 90% der Beschichtungsoberfläche ausmacht oder für die gesamte Beschichtungsoberfläche, geringer als 1 mm, insbesondere geringer als 0,5 mm, vorzugsweise geringer als 0,3 mm, insbesondere bevorzugt geringer als 0,2 mm, ganz besonders bevorzugt unter 0,15 mm ist. Hierdurch werden eine hervorragende Haftwirkung und ein verminderte Brennbarkeit erzielt.

Die Erfindung betrifft ferner ein Fassadenverbundsystem erhältlich durch das vorstehend beschriebene Herstellungsverfahren.

Es ist bevorzugt wenn die Frontplatte unmittelbar mit der Trägerschicht verbunden ist, d.h. es liegt keine Zwischenschicht vor, oder mittelbar mit der Trägerschicht verbunden ist, wobei die Zwischenschicht, insbesondere des ersten Reaktionsharzes, bevorzugt eine mittlere Schichtdicke von weniger als 0,9 mm aufweist, insbesondere von weniger als 0,5 mm, weiter bevorzugt von weniger als 0,3 mm und besonders bevorzugt im Bereich von 50 bis 250 µm. Vorzugsweise ist das Fassadenverbundsystem zweilagig, wobei entweder kein erstes Reaktionsharz bei der Herstellung verwenden wurde oder dieses keine eigenständige Lage ausgebildet hat. Auch bevorzugt ist ein dreilagiges Fassadenverbundsystem, wobei die Lage zwischen der Frontlage und der Trägerschicht eine mittlere Schichtdicke von weniger als 0,9 mm aufweist, insbesondere von weniger als 0,5 mm.

Die Erfindung betrifft ferner ein Fassadenverbundsystem erhältlich durch das vorstehend beschriebene Herstellungsverfahren, insbesondere erhältlich durch das vorstehend beschriebene Herstellungsverfahren, umfassend eine Frontplatte mit einer Beschichtungsoberfläche aufweisend oder bestehend aus einem nichtmetallischen, anorganischen Werkstoff, vorzugsweise ferner umfassend eine Verbindungsschicht mit einem ersten Reaktionsharz, insbesondere eine Verbindungsschicht überwiegend bestehend aus dem ersten Reaktionsharz, wobei das Fassadenverbundsystem ferner eine Trägerschicht mit einem Füllstoff, insbesondere Leichtfüllstoff, und mit einem zweiten Reaktionsharz als Bindemittel für den Füllstoff, insbesondere Leichtfüllstoff, umfasst, wobei das erste und/oder zweite Reaktionsharz die Frontplatte mit der Trägerschicht verbindet und zwischen diesen angeordnet ist, vorzugsweise wobei die Beschichtungsoberfläche Unebenheiten, insbesondere Vertiefungen, aufweist, in welchen das erste und/oder zweite Reaktionsharz vorliegt und/oder wobei die Verbindungsschicht ein Flächengewicht von weniger als 3 kg/m², insbesondere von weniger als 1 kg/m², aufweist.

Bei dem Fassadenverbundsystem werden Platten nicht herkömmlich verklebt, sondern vorzugsweise eine dünne Schicht nicht ausgehärtetes erstes Reaktionsharz direkt mit einem nicht ausgehärteten zweiten Reaktionsharz kontaktiert. Dies erzeugt eine besonders feste Anbindung der Frontplatte an die Trägerschicht und verbessert das Brandverhalten.

Die vorstehend beschriebenen Eigenschaften, insbesondere der Frontplatte, der Trägerschicht, des Füllstoffs, insbesondere des Leichtfüllstoffs, des Hydrophobierers, sind auch bevorzugte Eigenschaften des Fassadenverbundsystems. Die vorstehend beschriebenen Materialien der Frontplatte, der Trägerschicht, des Füllstoffs, insbesondere des Leichtfüllstoffs, des Hydrophobierers sind auch bevorzugte Materialien des Fassadenverbundsystems.

Nachstehend werden nur einige diese Eigenschaften exemplarisch nochmals genannt, wobei dies nicht dahingehend gelesen werden darf, dass die vorstehend nur in Verbindung mit dem Herstellungsverfahren explizit angeführten Eigenschaften oder Materialien weniger bedeutsam wären. Es sollen nur unnötige Wiederholungen vermieden werden.

Beispielsweise ist es ebenso wie beim Herstellungsverfahren für das Fassadenverbundsystem bevorzugt, wenn die Frontplatte einen nichtmetallischen, anorganischen Werkstoff umfasst und vorzugsweise überwiegend oder vollständig aus diesem besteht, vorzugsweise ein nichtmetallischer, anorganischer Werkstoff ausgewählt aus einer Gruppe bestehend aus Glas, insbesondere Einscheibensicherheitsglas, Stein, insbesondere Naturstein, Keramik und anorganischem Bindemittel, insbesondere Zement, und/oder wenn die Frontplatte Photovoltaikzellen, insbesondere Siliziumsolarzellen umfasst. Es kann sich beispielsweise um eine Platte bestehend aus dem anorganischen Bindemittel handeln, insbesondere eine Zementplatte. Besonders bevorzugt sind Glasplatten, Steinplatten, Keramikplatten oder Zementplatten, wobei die Platten jeweils gänzlich oder überwiegend aus den entsprechenden Werkstoffen bestehen. Auch ist es bevorzugt, wenn die Frontplatte des Fassadenverbundsystems eine mittlere Schichtdicke von 4 bis 30 mm, insbesondere 6 bis 20 mm, vorzugsweise 8 bis 12 mm, aufweist, und/oder wenn das Fassadenverbundsystem ein Brandverhalten der Klassifizierung A2 - s1 do oder A1 gemäß DIN EN 13501-1:2010-01 aufweist, und/oder wenn der Füllstoff, insbesondere Leichtfüllstoff, ganz oder überwiegend eine Korngröße von 0,1 bis 5 mm, insbesondere 0,2 bis 2 mm, vorzugsweise 0,25 bis 1 mm, nach DIN EN 993-1:2017-04 aufweist. Die Vorteile der besagten Merkmale wurden bereits in Verbindung mit dem Herstellungsverfahren diskutiert, so dass sich diesbezüglich weitere Ausführungen erübrigen. Weitere Eigenschaften, Materialien und Merkmale ergeben sich aus der Beschreibung des Herstellungsverfahrens.

Die Eigenschaften des ersten und zweiten Reaktionsharzes im erfindungsgemäßen Fassadenverbundsystem ergeben sich ebenfalls aus dem Herstellungsverfahren, jedoch ist zu berücksichtigen, dass diese nunmehr ausgehärtet sind und damit die Viskositäten und Ausgangszusammensetzungen auf das Herstellungsverfahren für das finale Fassadenverbundsystem und nicht auf das finale Fassadenverbundsystem selbst bezogen sind. Allerdings lassen sich die ausgehärteten Reaktionsharze auch über die Ausgangsprodukte definieren, da die entsprechenden Bestandteile chemisch definiert abreagieren und dem Fachmann bekannt ist, welche Ausgangsstoffe er zugegeben hat, um ein ausgehärtetes Reaktionsharz zu erhalten. Auch wenn eine exakte strukturelle Charakterisierung des ausgehärteten Reaktionsharzes oftmals nicht möglich ist, können doch die Ausgangsmaterialien bestimmt werden. Dementsprechend sind Reaktionsharze besonders bevorzugt, welche durch eine Mischung von der vorstehend beschriebenen ersten und zweiten Reaktionsharzkomponente erhalten werden. Auch ist es bevorzugt, wenn der, insbesondere flächenbezogene, Brennwert des ersten Reaktionsharzes zwischen Trägerschicht und Frontplatte weniger als 16 MJ/m² beträgt, insbesondere weniger als 8 MJ/m², insbesondere bevorzugt weniger als 4 MJ/m², ganz besonderes bevorzugt weniger als 3 MJ/m2. Auch ist es bevorzugt, wenn der, insbesondere gewichtsbezogene, Brennwert des Fassadenverbundsystems kleiner oder gleich 3 MJ/kg ist (bestimmt nach DIN EN ISO 1716:2010-11).

Weitere Eigenschaften, Materialien und Merkmale der Reaktionsharze ergeben sich aus der Beschreibung des Herstellungsverfahrens.

Ferner betrifft die Erfindung eine Gebäudefassade umfassend das beschriebene Fassadenverbundsystem und eine Gebäudewand.

Ferner betrifft die Erfindung die Verwendung des unmittelbar durch das vorstehend beschriebene Herstellungsverfahren hergestellten Erzeugnisses, insbesondere in Form des Fassadenverbundsystems, zum vollständigen oder teilweisen Verkleiden einer Gebäudewand. Das unmittelbar durch das vorstehend beschriebene Herstellungsverfahren hergestellte Erzeugnis ist ein Fassadenverbundsystem, insbesondere in Form des Fassadenverbundsystems, welches durch das beanspruchte erfindungsgemäße Herstellungsverfahren und zwar nur durch dieses erhalten wurde.

Ferner betrifft die Erfindung die Verwendung des vorstehend beschriebenen Fassadenverbundsystems zum vollständigen oder teilweisen Verkleiden einer Gebäudewand.

Überraschenderweise werden Fassadenverbundsysteme mit besonders gut verbundenen Schichten erhalten, wenn die Trägerschicht, wie vorstehend beschrieben, in situ mit dem Herstellungsverfahren erzeugt wird. Die vorliegende Erfindung zeichnet sich dadurch aus, dass ein Herstellungsverfahren gefunden wurde, welches effizienter und in weniger Schritten verbesserte Fassadenverbundsysteme erzeugt. Diese sind zudem gegenüber dem Stand der Technik kostengünstiger, sicherer und robuster. So entfällt ein Schleifen gesägter Natursteinfrontplatten an der Rückseite. Kleine Fehlstellen wie Risse, Vertiefungen werden überbrückt und bedürfen keiner vorherigen Bearbeitung. Überraschend hat sich gezeigt, dass auch unterschiedliche Dicken in den Frontplatten über dieses Verfahren ausgeglichen werden können, um einheitlich dicke Fassadenverbundsysteme auszubilden. Überraschender Weise wird über dieses Verfahren ein stabiles Fassadenverbundsystem mit einer Frontplatte und einer plattenartigen Trägerschicht erhalten. Ein weiterer Vorteil der Erfindung ist die Ähnlichkeit der Schichten. Da die dünne Schicht des ersten Reaktionsharzes keine hauptsächlich wirksame Schicht darstellt, ist die Frontplatte bevorzugt direkt oder fast direkt der Trägerschicht, verbunden. Dieses Fassadenverbundsystem neigt beispielsweise bei Temperaturschwankungen nicht dazu, große Spannungen aufzubauen, was die Haltbarkeit verbessert.

Weitere Merkmale und Vorteile der Erfindung ergeben sich aus der nachfolgenden Beschreibung, in ein Ausführungsbeispiel der Erfindung beispielhaft erläutert wird, ohne dadurch die Erfindung zu beschränken.

Das Ausführungsbeispiel des Herstellungsverfahrens für ein Fassadenverbundsystem mit einer Frontplatte und einer Trägerschicht, weist die folgenden Schritte auf:
- a): Einführen der Frontplatte in eine Pressform. Die Frontplatte hat Dimensionen von 300 x 300 x 8 mm und besteht aus Naturstein. Der Naturstein besteht aus Granit.
- b): Benetzen einer Seite des Natursteins mit 11,25 g des ersten Reaktionsharzes. Das erste Reaktionsharz besteht aus dem Epoxidharzsystem SIKA Biresin CR83 als erste Reaktionsharzkomponente und aus 2-Piperazin-1-ylethylamin (z.B. SIKA Biresin CH 125-1 Part B) als zweite Reaktionsharzkomponente, wobei das Mischungsverhältnis 100:26 beträgt.
- c): Einfüllen einer Mischung mit dem Füllstoff und dem zweiten Reaktionsharz in die Pressform. Der Füllstoff ist Poraver, wobei 650,6 g mit einer mittleren Korngröße von 0,5 bis 1,0 mm verwendet wird. Das zweite Reaktionsharz ist dasselbe wie das erste Reaktionsharz und es wird 62,3 g verwendet. Ferner ist der Hydrophobierer Wacker Silres BS 1702 Bestandteil der Mischung.
- d): Platzhaltern für eine Aufhängung der Trägerschicht können eingeführt werden
- e): Die auf 120°C vorgewärmte Pressform wird zusammengefahren bis die Dicke der Trägerschicht 15,5 cm beträgt.
- f): Es folgt das Aushärten des zweiten Reaktionsharzes bei einer ersten Aushärtetemperatur von 120°C für eine erste Aushärtezeitdauer von 350 s.
- g): Es folgt die Entnahme des Fassadenverbundsystems aus der Pressform, wobei ein Nachhärten für 24 h unter Erwärmung auf 50°C optional vor oder nach besagter Entnahme möglich ist.

Das so erhaltene Fassadenverbundsystem hat eine Haftzugfestigkeit von 0,8 ± 0,1 MPa und das resultierende Bruchbild lag zu ca. 95% kohäsiv in der Trägerschicht, so dass die starke Adhäsion zwischen Naturstein und Trägerschicht experimentell bestätigt werden konnte. Die Trägerschicht selbst ist also intern weniger stabil, als die Verbindung zwischen Trägerschicht und dem Naturstein. Dies ist vorteilhaft, da einem Brechen des Natursteins entgegengewirkt wird. Das Fassadenverbundsystem weist ferner ein Brandverhalten der Klassifizierung A2 - s1 do oder A1 gemäß DIN EN 13501-1:2010-01 auf und ist damit nicht brennbar.

Die in der voranstehenden Beschreibung, den Ansprüchen sowie dem Ausführungsbeispiel offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Herstellungsverfahren für ein Fassadenverbundsystem mit einer Frontplatte und einer Trägerschicht,
wobei die Frontplatte mindestens eine Beschichtungsoberfläche aufweist, wobei vorzugsweise ein erstes Reaktionsharz die Frontplatte und die Trägerschicht verbindet, insbesondere wobei das erste Reaktionsharz eine Verbindungsschicht ausbildet,
wobei die Trägerschicht einen Füllstoff, insbesondere Leichtfüllstoff, und ein zweites Reaktionsharz umfasst,
wobei das Verfahren die folgenden Schritte aufweist:
1) Einführen der Frontplatte in eine Form, insbesondere Pressform, vorzugsweise wobei die Frontplatte mit einem, insbesondere flüssigen, ersten Reaktionsharz beschichtet ist oder nach besagtem Einführen mit diesem beschichtet wird,
2) Einfüllen einer Mischung umfassend Füllstoff, insbesondere Leichtfüllstoff, und ein zweites Reaktionsharz in die Form,
3) vorzugsweise Einführen in die Form von Platzhaltern und/oder Befestigungsvorrichtungen zur Aufhängung des Fassadenverbundsystems an einer Gebäudewand, insbesondere von Platzhaltern und/oder Befestigungsvorrichtungen in Form von Metall- oder Kunststoffelementen,
4) vorzugsweise Bereitstellen der Form in einer Presse, insbesondere Einführen der Pressform in eine Presse nach Auflage einer Pressplatte, vorzugsweise auf die Mischung mit dem Füllstoff und zweitem Reaktionsharz, und Zusammenfahren der Presse,
5) Aushärten des zweiten Reaktionsharzes bei einer ersten Aushärtetemperatur für eine erste Aushärtezeitdauer, insbesondere in der Presse, welche auf die erste Aushärtetemperatur erwärmt wurde,
6) vorzugsweise Nachhärten des ersten und/oder zweiten Reaktionsharzes bei einer zweiten Aushärtetemperatur für eine zweite Aushärtezeitdauer,
7) Entnahme des Fassadenverbundsystems aus der Form, insbesondere die Pressform aus der Presse und das Fassadenverbundsystem aus der Pressform.

2. Herstellungsverfahren nach Anspruch 1, **dadurch gekennzeichnet, dass** in Schritt 4) die Presse vor dem Einführen der Pressform auf eine Vorwärmtemperatur vorerhitzt wurde, insbesondere wobei die Vorwärmtemperatur 30 bis 250°C, vorzugsweise 100 bis 160°C, insbesondere bevorzugt 110 bis 140°C, ganz besonders bevorzugt 120 bis 130°C, beträgt,

3. Herstellungsverfahren nach Anspruch 1 oder 2, **dadurch gekennzeichnet, dass** die erste Aushärtetemperatur 30 bis 250°C, insbesondere 70 bis 200°C, vorzugsweise 100 bis 160°C, insbesondere bevorzugt 110 bis 140°C, ganz besonders bevorzugt 120 bis 130°C, beträgt, und/oder
dass die erste Aushärtezeitdauer 20 bis 10.000 Sekunden, insbesondere 40 bis 4.000 Sekunden, vorzugsweise 100 bis 2.000 Sekunden, insbesondere bevorzugt 150 bis 1.000 Sekunden, ganz besonderes bevorzugt 200 bis 800 Sekunden, beträgt.

4. Herstellungsverfahren nach einem der vorangehenden Ansprüche, **dadurch gekennzeichnet, dass**
in Schritt 1) weniger als 5 kg/m², insbesondere weniger als 2 kg/m², vorzugsweise weniger als 1 kg/m², insbesondere bevorzugt weniger als 0,5 kg/m² des ersten Reaktionsharzes auf die Beschichtungsoberfläche der Frontplatte aufgetragen wird, und/oder
dass in Schritt 1) der, insbesondere flächenbezogene, Brennwert des ersten Reaktionsharzes auf der Beschichtungsoberfläche der Frontplatte weniger als 16 MJ/m² beträgt, insbesondere weniger als 8 MJ/m², insbesondere bevorzugt weniger als 4 MJ/m², ganz besonderes bevorzugt weniger als 3 MJ/m².

5. Herstellungsverfahren nach einem der vorangehenden Ansprüche, **dadurch gekennzeichnet, dass**
in Schritt 2) auch ein Hydrophobierer, insbesondere umfassend ein Silan und/oder Siloxan, zugegeben wird.

6. Herstellungsverfahren nach einem der vorangehenden Ansprüche, **dadurch gekennzeichnet, dass**
das erste und/oder zweite Reaktionsharz als, insbesondere nicht ausgehärtete und flüssige, Mischung mit einem Epoxidharz als erste Reaktionsharzkomponente und einem Härter, insbesondere einem Amin, als zweite Reaktionsharzkomponente gleichzeitig oder nacheinander in die Form gegeben wird.

7. Herstellungsverfahren nach einem der vorangehenden Ansprüche, **dadurch gekennzeichnet, dass**
der Füllstoff ganz oder überwiegend eine Korngröße von 0,1 bis 5 mm, insbesondere 0,2 bis 2 mm, vorzugsweise 0,25 bis 1 mm, nach DIN EN 993-1:2017-04 aufweist, und/oder
dass der Füllstoff ein Leichtfüllstoff ist, der eine Schüttdichte von weniger als 800 kg/m³, insbesondere weniger als 600 kg/m³, insbesondere bevorzugt weniger als 500 kg/m³, ganz besonderes bevorzugt weniger als 400 kg/m³, aufweist.

8. Herstellungsverfahren nach einem der vorangehenden Ansprüche, **dadurch gekennzeichnet, dass**
die Frontplatte einen nichtmetallischen, anorganischen Werkstoff umfasst und vorzugsweise überwiegend oder vollständig aus diesem besteht, vorzugsweise ein nichtmetallischer, anorganischer Werkstoff ausgewählt aus einer Gruppe bestehend aus Glas, insbesondere Einscheibensicherheitsglas, Stein, insbesondere Naturstein, Keramik und anorganischem Bindemittel, insbesondere Zement, und/oder dass die Frontplatte Photovoltaikzellen, insbesondere Siliziumsolarzellen umfasst.

9. Herstellungsverfahren nach einem der vorangehenden Ansprüche, **dadurch gekennzeichnet, dass**
die Frontplatte eine mittlere Schichtdicke von 4 bis 30 mm, insbesondere von 6 bis 20 mm, vorzugsweise von 8 bis 12 mm, aufweist, und/oder
dass die Trägerschicht eine mittlere Schichtdicke von 4 bis 140 mm, insbesondere von 8 bis 70 mm, vorzugsweise von 12 bis 35 mm, aufweist.

10. Herstellungsverfahren nach einem der vorangehenden Ansprüche, **dadurch gekennzeichnet, dass**
das in Schritt 7) erhaltene Fassadenverbundsystem eine Klassifizierung A2 - s1 do gemäß DIN EN 13501-1:2010-01 hat.

11. Herstellungsverfahren nach einem der vorangehenden Ansprüche, **dadurch gekennzeichnet, dass**
das erste und/oder zweite Reaktionsharz beim Aufbringen in Schritt 1) bzw. beim Einfüllen in Schritt 2) eine Viskosität bei 23°C von weniger als 1000 mPa*s, insbesondere von weniger als 500 mPa*s, vorzugsweise von weniger als 300 mPa*s, insbesondere bevorzugt weniger als 200 mPa*s aufweist.

12. Herstellungsverfahren nach einem der vorangehenden Ansprüche, **dadurch gekennzeichnet, dass**
in Schritt 1) das Auftragen des ersten Reaktionsharzes auf die Beschichtungsoberfläche der Frontplatte so homogen erfolgt, dass die Differenz zwischen maximaler Schichtdicke und minimaler Schichtdicke des ersten Reaktionsharzes für einen überwiegenden Abschnitt der Beschichtungsoberfläche, insbesondere für einen Abschnitt der Beschichtungsoberfläche, der mindestens 90% der Beschichtungsoberfläche ausmacht, weniger als 3 mm, vorzugsweise weniger als 1, mm, insbesondere bevorzugt weniger als 0,7 mm, ganz besonders bevorzugt weniger als 0,3 mm, beträgt und/oder
dass in Schritt 1) das Auftragen des ersten Reaktionsharzes auf die Beschichtungsoberfläche der Frontplatte so dünn erfolgt, dass die mittlere oder maximale Schichtdicke für einen überwiegenden Abschnitt der Beschichtungsoberfläche, insbesondere für einen Abschnitt der Beschichtungsoberfläche, der mindestens 90% der Beschichtungsoberfläche ausmacht, geringer als 5 mm, insbesondere geringer als 3 mm, vorzugsweise geringer als 1,5 mm, insbesondere bevorzugt geringer als 1,0 mm ist.

13. Fassadenverbundsystem erhältlich durch das Herstellungsverfahren nach einem der Ansprüche 1 bis 12.

14. Fassadenverbundsystem, insbesondere nach Anspruch 13, umfassend,
eine Frontplatte mit einer Beschichtungsoberfläche aufweisend oder bestehend aus einem nichtmetallischen, anorganischen Werkstoff,
eine Trägerschicht mit einem Füllstoff, insbesondere Leichtfüllstoff, und einem zweiten Reaktionsharz als Bindemittel für den Füllstoff,
vorzugsweise ferner umfassend eine Verbindungsschicht mit einem ersten Reaktionsharz, insbesondere überwiegend bestehend aus dem ersten Reaktionsharz, wobei das erste und/oder zweite Reaktionsharz die Frontplatte mit der Trägerschicht verbindet und zwischen diesen angeordnet ist,
vorzugsweise wobei die Beschichtungsoberfläche Unebenheiten, insbesondere Vertiefungen, aufweist, in welchen das erste und/oder zweite Reaktionsharz vorliegt.

15. Fassadenverbundsystem nach Anspruch 13 oder 14, **dadurch gekennzeichnet, dass** die Frontplatte mindestens einen nichtmetallischen, anorganischen Werkstoff umfasst und vorzugsweise überwiegend oder vollständig aus diesem besteht, vorzugsweise ein nichtmetallischer, anorganischer Werkstoff ausgewählt aus einer Gruppe bestehend aus Glas, insbesondere Einscheibensicherheitsglas, Stein, insbesondere Naturstein, Keramik und anorganischem Bindemittel, insbesondere Zement oder Mischungen derselben, und/oder
dass die Frontplatte Photovoltaikzellen, insbesondere Siliziumsolarzellen umfasst, und/oder
dass die Frontplatte eine mittlere Schichtdicke von 4 bis 30 mm, insbesondere 6 bis 20 mm, vorzugsweise 8 bis 12 mm, aufweist, und/oder
dass das Fassadenverbundsystem ein Brandverhalten der Klassifizierung A2 - s1 do oder A1 gemäß DIN EN 13501-1:2010-01 aufweist, und/oder dass der Füllstoff, insbesondere Leichtfüllstoff, ganz oder überwiegend eine Korngröße von 0,1 bis 5 mm, insbesondere 0,2 bis 2 mm, vorzugsweise 0,25 bis 1 mm, nach DIN EN 993-1:2017-04 aufweist.

16. Verwendung des unmittelbar durch das Herstellungsverfahren nach einem der Ansprüche 1 bis 12 hergestellten Erzeugnisses oder des Fassadenverbundsystems nach einem der Ansprüche 13 bis 15 zum vollständigen oder teilweisen Verkleiden einer Gebäudewand.
